# FASCICULE DE BREVET EUROPEEN

(11) **EP 2 422 486 B1**
(45) Date de publication et mention de la délivrance du brevet: **06.06.2018**
(21) Numéro de dépôt: 10713686.3
(22) Date de dépôt: 16.04.2010
(51) Int. Cl.: G06F 1/32, H04L 12/40

(54) **PROCÉDÉ ET DISPOSITIF DE RÉDUCTION DE LA CONSOMMATION ÉLECTRIQUE D'UNE INTERFACE ETHERNET**
VERFAHREN UND EINRICHTUNG ZUR VERRINGERUNG DES STROMVERBRAUCHS EINER ETHERNET-SCHNITTSTELLE
METHOD AND DEVICE FOR REDUCING THE ELECTRICITY CONSUMPTION OF AN ETHERNET INTERFACE

(30) Priorité: 22.04.2009 FR 0952627
(43) Date de publication de la demande: 29.02.2012
(73) Titulaire: SAGEMCOM BROADBAND SAS, 92500 Rueil Malmaison (FR)
(72) Inventeur: DANGY-CAYE, Nicolas, F-92500 Rueil-Malmaison (FR)
(74) Mandataire: Cabinet Le Guen Maillet
(86) Numéro de dépôt international: PCT/EP2010/055038
(87) Numéro de publication internationale: WO 2010/121965

(56) Documents cités:
- EP-A2- 1 168 717
- US-A1- 2003 206 564
- US-A1- 2004 228 275
- US-B1- 6 993 667

## Description

La présente invention concerne un procédé de réduction de la consommation électrique d'une interface Ethernet.

Une interface Ethernet est hébergée par un équipement dans le but d'échanger des trames de signaux avec une autre interface Ethernet hébergée par un autre équipement distant relié au premier équipement par un câble.

Une interface Ethernet regroupe un ensemble de fonctionnalités qui sont implémentées au niveau de deux couches : la couche physique et la couche MAC (Medium Access Control). Ces fonctionnalités de la couche physique et MAC sont mises en oeuvre par des moyens matériels qui se présentent habituellement pour la couche physique sous la forme d'un ensemble de composants électroniques appelés « Ethernet physic chipset » en anglais et pour la couche MAC sous la forme d'un processeur.

On parlera, par la suite, d'activation et de désactivation d'une interface Ethernet. L'interface Ethernet sera dite active lorsque les moyens matériels de sa couche physique et de sa couche MAC seront alimentés électriquement. L'interface Ethernet sera alors en mesure d'échanger des trames de signaux avec une interface distante. L'interface Ethernet sera dite inactive lorsque les moyens matériels de sa couche physique ne seront pas alimentés électriquement.

On parlera également par la suite d'activité sur la couche physique et sur la couche MAC d'une interface Ethernet pour exprimer que des trames de signaux sont reçus ou émises par l'interface Ethernet.

L'alimentation électrique des moyens matériels de la couche physique et de la couche MAC d'une interface Ethernet induit une consommation électrique qui, bien que indispensable lorsque l'interface Ethernet est susceptible d'échanger des trames de signaux porteurs de données utiles, peut être réduite lorsque l'équipement qui l'héberge n'est pas sous tension ou que le lien qui la relie à une interface Ethernet distante est rompu.

La plupart des équipements actuels qui hébergent une interface Ethernet mettent en oeuvre une fonctionnalité dite de détection d'énergie (Energy Detect en anglais). Cette fonctionnalité permet de réduire la consommation électrique d'une interface Ethernet en la faisant basculer d'un mode actif, c'est-à-dire dans un mode dans lequel l'interface est active, vers un mode inactif dans lequel l'interface est inactive, lorsqu'une inactivité est détectée sur sa couche physique pendant une durée prédéterminée. Par ailleurs, lorsqu'une activité est détectée sur sa couche physique, l'interface bascule du mode inactif vers le mode actif.

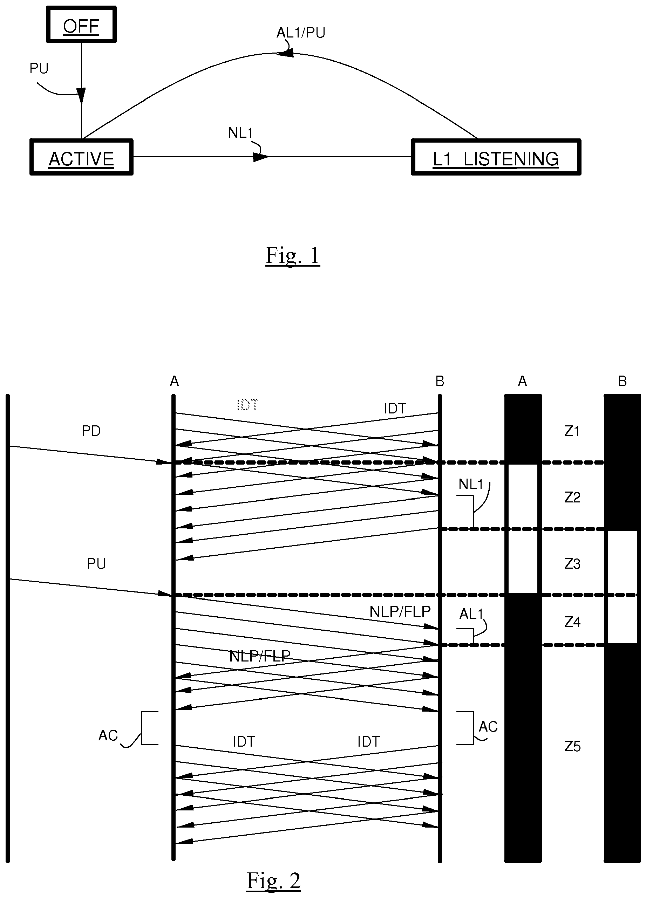

Les demandes de brevets EP1168717, US6993667 et US7278039 décrivent la mise en oeuvre d'une telle fonctionnalité dont le fonctionnement est résumé en relation avec la Fig. 1.

La Fig. 1 représente un diagramme d'état relatif au fonctionnement d'une interface Ethernet de l'état de la technique qui met en oeuvre la fonctionnalité de détection d'énergie.

L'interface Ethernet fonctionne selon trois modes: hors tension appelé OFF, actif appelé ACTIVE ou inactif appelé L1_LISTENING.

Dans le mode OFF, l'interface est hors tension et ne consomme donc aucune énergie électrique. Ce mode correspond, en particulier, lorsque l'équipement est mis hors tension. Lorsque l'équipement qui héberge l'interface est mis sous tension, événement PU, l'interface bascule dans le mode ACTIVE dans lequel l'interface est activée. L'interface tente alors d'établir un lien Ethernet avec une autre interface Ethernet distante hébergée par un autre équipement et ce au cours d'une phase de négociation entre interfaces Ethernet distantes. Une telle phase peut être conforme à la norme 802.3 clause 28.

Une fois le lien Ethernet établi, les interfaces sont alors configurées pour d'éventuels échanges de trames de signaux entre les deux équipements.

Lorsqu'une inactivité sur la couche physique de l'interface Ethernet est détectée pendant une durée prédéterminée T_L1_INACTIVE, l'interface bascule du mode ACTIVE vers le mode L1_LISTENING dans lequel l'interface Ethernet est désactivée. Des moyens peu consommateurs en énergie électrique sont alors mis en oeuvre pour détecter une activité éventuelle sur la couche physique de l'interface Ethernet.

Lorsqu'une interface Ethernet est inactive, sa consommation est donc réduite par rapport à celle qu'elle consomme lorsqu'elle est active. On parle parfois de fonctionnement de l'interface en mode basse consommation du fait que seuls les moyens pour détecter une activité éventuelle sur sa couche physique restent alimentés en électricité lorsque l'interface Ethernet est inactive.

L'interface Ethernet bascule du mode L1_LISTENING vers le mode ACTIVE, lorsqu'une activité sur sa couche physique a été détectée (événement AL1) ou lorsqu'un ordre d'activation (événement WU) a été émis par une couche protocolaire de l'équipement hôte.

Un lien Ethernet est alors établi entre interfaces distantes et des échanges de trames de signaux entre équipements peuvent débuter tel que expliqué ci-dessus.

L'interface Ethernet bascule du mode ACTIVE ou du mode L1_LISTENING vers le mode OFF lorsque l'équipement hôte est mis hors tension.

Une interface Ethernet hébergée par un équipement mettant en oeuvre la fonctionnalité de détection d'énergie décrite en relation avec la Fig. 1 permet donc d'économiser de l'énergie électrique lorsqu'une inactivité sur la couche physique de l'interface Ethernet est détectée pendant une durée prédéterminée et d'activer cette interface dès qu'une activité de sa couche physique est détectée ou qu'un ordre d'activation émane de l'équipement hôte.

Toutefois, la mise en oeuvre de la fonctionnalité de détection d'énergie n'est pas performante dans le cas où l'équipement est en veille. En effet, lorsque aucune trame de signaux porteurs de données utiles n'est échangée sur un lien Ethernet reliant deux interfaces, les deux interfaces Ethernet échangent tout de même des trames de signaux (appelés habituellement IDLE) qui génèrent une activité sur leur couches physiques et
qui, par conséquent, ne permettent pas à ces interfaces de basculer du mode ACTIVE vers le mode L1_LISTENING. Ainsi, bien qu'il n'y ait pas de trafic de données utiles entre ces deux interfaces Ethernet, ces interfaces consomment une énergie électrique résiduelle. Cette consommation, de quelques centaines de milliwatts par interface, n'est pas négligeable sur une longue période telle que par exemple sur une période nocturne.

La fonctionnalité de détection d'énergie n'est donc adaptée que pour réduire la consommation d'énergie des interfaces Ethernet lorsque le câble reliant ces interfaces est rompu ou que l'un des équipements hôtes sur un lien Ethernet établi est mis hors tension tel que illustré à la Fig. 2.

La demande américaine US2003/0206564 décrit un procédé de réduction de la consommation électrique d'une interface Ethernet basculant entre un mode actif, dans lequel l'interface est activée, vers un mode basse consommation dans lequel l'interface est désactivée. Selon D2, l'interface bascule périodiquement du mode basse consommation vers le mode actif pour envoyer un paquet de données et ce dans le but de maintenir actif le lien Ethernet entre cette interface et une interface distante.

La demande américaine US2004/0228275 décrite est un procédé de réduction de la consommation électrique d'une interface Ethernet. Un lien Ethernet est établi entre un émetteur et un récepteur et il est alors déterminé périodiquement si une condition est vérifiée (telle qu'un time-out). Si tel est le cas, une partie des éléments du récepteur est désactivée, des paquets comprenant des commandes sont émis par l'émetteur et un détecteur est activé côté récepteur pour analyser les commandes d'un paquet reçu.

Sur la Fig. 2, est représenté un chronogramme qui illustre le fonctionnement d'une interface Ethernet mettant en oeuvre un procédé de réduction de la consommation électrique d'une interface Ethernet selon l'état de la technique.

Deux équipements A et B sont considérés. Ces équipements A et B échangent des trames de signaux qui sont représentées par des traits parallèles terminés par des flèches pour indiquer leur sens de transmission.

Sur la droite de la Fig. 2 est représentée schématiquement la consommation de chaque équipement A et B hébergeant respectivement une interface Ethernet ETHA et ETHB. Les zones noires représentent le cas où l'interface Ethernet d'un équipement fonctionne dans le mode ACTIVE et les zones non remplies (blanches) représentent le cas où l'interface Ethernet fonctionne dans le mode L1_LISTENING ou OFF.

Considérons maintenant que l'équipement A est mis hors tension ou que le câble Ethernet reliant les interfaces ETHA et ETHB soit rompu (événement PD). Prenons le cas où l'interface ETHA bascule du mode ACTIVATE vers le mode OFF. On pourrait également envisager que l'interface ETHB bascule la première vers le mode OFF sans pour autant modifier le principe du fonctionnement de réduction d'énergie de ces interfaces décrit ci-dessous.

Les moyens matériels de la couche physique et de la couche MAC de l'interface ETHA ne sont alors plus alimentés en électricité et l'interface ETHA n'émet donc plus de trames IDT. L'interface ETHA fonctionne alors dans un mode basse consommation tandis que l'interface ETHB continue de fonctionner dans un mode de consommation nominale étant donné qu'elle fonctionne toujours en mode ACTIVATE (zone Z2).

A partir du moment où l'interface Ethernet ETHB ne reçoit plus de trame IDT de la part de l'interface Ethernet ETHA, l'interface Ethernet ETHB détecte qu'il n'y a plus d'activité sur sa couche physique et lance un compteur NL1 initialisé à la durée T_L1_INACTIVE à partir de la dernière trame IDT reçue. On peut noter que pendant cette durée l'interface ETHB fonctionne dans le mode ACTIVATE et continue à émettre des trames IDT tout en écoutant si elle ne reçoit pas de trame IDT pour détecter toute activité éventuelle sur sa couche physique.

A l'expiration de la durée T_L1_INACTIVE, l'interface Ethernet ETHB bascule du mode ACTIVATE vers le mode L1_LISTENING, c'est-à-dire dans un mode basse consommation (zone 3).

Considérons maintenant que l'équipement A est remis sous tension par action par exemple sur un bouton ou par un ordre émis par une couche protocolaire de l'équipement hôte (événement PU). L'interface ETHA bascule alors du mode OFF vers le mode ACTIVATE et initie une phase de négociation du lien Ethernet en émettant des trames NPL/FLP. L'interface ETHB est toujours dans le mode L1_LISTENING (zone 4).

L'interface ETHB détecte de l'activité sur sa couche physique (événement AL1) et bascule alors du mode L1_LISTENING vers le mode ACTIVATE afin de répondre à la phase de négociation initiée par l'interface ETHA.

Les deux interfaces ETHA et ETHB fonctionnent alors dans le mode ACTIVATE, poursuivent la phase de négociation et établissent le lien Ethernet (événement AC). Les deux interfaces fonctionnent alors dans leur mode nominal illustré ici par l'échange de trames IDT (zone 5).

Comme on vient de le voir, la mise en oeuvre de la fonctionnalité de détection d'énergie par détection de l'inactivité sur la couche physique d'une interface Ethernet permet d'optimiser la consommation d'une telle interface lorsque l'interface distante n'est plus alimentée ou que le câble est rompu. Par contre, elle ne permet pas d'optimiser la consommation de deux interfaces émettant des trames IDT, c'est-à-dire sans trafic effectif (zone 1). De plus, une interface Ethernet qui fonctionne dans un mode basse consommation ne peut pas activer une autre interface car, selon l'état de la technique, cette dernière ne peut l'être que par une action locale (appui bouton, télécommande) sur l'équipement qui l'héberge.

Le problème résolu par la présente invention est en outre de remédier à ces inconvénients.

A cet effet, l'invention concerne un procédé de réduction de la consommation électrique d'une interface Ethernet basculant dans un mode basse consommation par détection de l'inactivité sur sa couche physique pendant une première durée prédéterminée. Le procédé est caractérisé en ce que l'interface bascule également dans un mode basse consommation par détection d'une inactivité sur sa couche MAC pendant une deuxième durée prédéterminée.

Ainsi, la présente invention consiste, de manière générale, à détecter l'activité sur la couche MAC d'une interface Ethernet. Si aucune trame n'a été reçue au niveau de la couche MAC, l'interface considère alors que les trames reçues sont des trames IDT et arrête d'émettre ces trames. L'interface distante ETHB ne reçoit alors plus de trame IDT et bascule également dans un mode basse consommation.

L'introduction du mode transitoire permet ainsi d'optimiser la consommation électrique de l'interface lorsque les équipements hôte sont en veille.

De plus, comme on le verra par la suite, les deux interfaces distantes sont alors dans un mode basse consommation mais elles peuvent maintenant être chacune activée soit à distance par l'autre interface soit par un événement émanant d'une couche de niveau supérieur à celui de la couche MAC.

Selon ses aspects matériels, la présente invention concerne un dispositif de réduction de la consommation électrique d'une interface Ethernet et un équipement qui héberge une interface Ethernet et un tel dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente un diagramme d'état du procédé de réduction de la consommation électrique d'une interface Ethernet selon l'état de la technique,
La Fig. 2 représente un chronogramme illustrant le fonctionnement d'une interface Ethernet mettant en oeuvre le procédé de la Fig. 1,
La Fig. 3 représente un diagramme d'état du procédé de réduction de la consommation électrique d'une interface Ethernet selon un mode de réalisation de la présente invention,
La Fig. 4 représente un chronogramme illustrant le fonctionnement d'une interface Ethernet selon le mode de réalisation du procédé de la Fig. 3,
La Fig. 5 représente un diagramme d'état du procédé de réduction de la consommation électrique d'une interface Ethernet selon un autre mode de réalisation de la présente invention,
La Fig. 6 représente un synoptique d'un mode de réalisation d'un équipement hébergeant une interface Ethernet et qui met en oeuvre l'un des procédés selon la présente invention, et
La Fig. 7 représente un synoptique d'un autre mode de réalisation d'un équipement hébergeant une interface Ethernet et qui met en oeuvre l'un des procédés selon la présente invention.

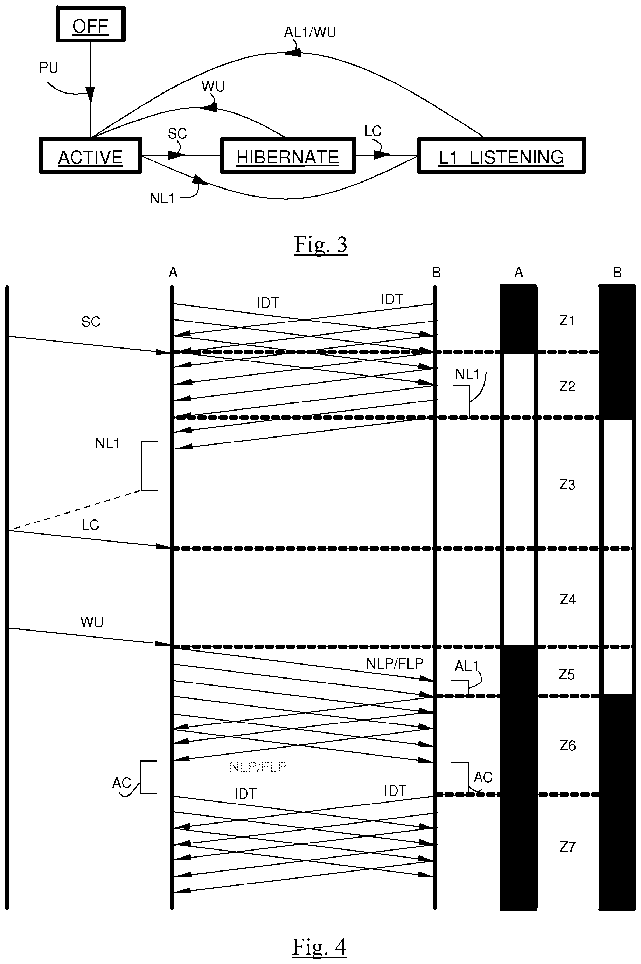

Les références des Fig. 3 à 5 qui sont communes avec celles des Fig. 1 à 2 désignent les mêmes éléments.

Le procédé selon l'invention introduit un mode de fonctionnement d'une interface Ethernet, appelé HIBERNATE, qui est transitoire (dans le temps) et dans lequel l'interface Ethernet cesse toute émission de trames de signaux lorsqu'une condition SC d'inactivité de l'interface est vérifiée. La condition SC est vérifiée si une inactivité sur la couche MAC de l'interface est détectée pendant une durée prédéterminée T_L2L, typiquement 1 mn, débutant à partir de la dernière détection d'activité sur sa couche MAC ou si un ordre de désactivation émane d'une couche de niveau supérieur à celui de la couche MAC de l'interface.

De préférence, au cours du mode HIBERNATE, l'interface Ethernet est désactivée. Cette caractéristique permet que l'interface bascule dans un mode de basse consommation.

L'interface Ethernet bascule du mode HIBERNATE vers le mode L1_LISTENING lorsqu'une condition LC est vérifiée.

Selon un mode de réalisation, la condition LC est vérifiée lorsqu'une inactivité sur la couche physique est détectée pendant la durée T_L1_INACTIVE, typiquement de 250ms, qui débute à partir de la dernière activité sur sa couche physique.

Selon un autre mode de réalisation qui peut également être associé au précédent, la condition LC est vérifiée à l'expiration d'une durée Eth_Toff, typiquement de 10s, débutant à partir de l'entrée de l'interface Ethernet dans le mode HIBERNATE. La durée Eth_Toff est déterminée pour assurer la compatibilité avec un équipement distant qui n'implémenterait pas la fonctionnalité de détection d'énergie, c'est-à-dire un équipement qui ne serait pas prévu pour que l'interface Ethernet qu'il héberge fonctionne soit dans le mode ACTIVE soit dans le mode L1_LISTENING.

L'interface Ethernet bascule du mode HIBERNATE vers le mode ACTIVATE suite à un ordre d'activation WU émanant d'une couche de niveau supérieur à la couche MAC de l'interface telle par exemple d'une couche applicative.

L'interface Ethernet bascule du mode L1_LISTENING vers le mode ACTIVE lorsqu'une condition AL1/WU est vérifiée.

Selon un mode de réalisation, la condition AL1/WU est vérifiée suite à la détection d'une activité sur la couche physique de l'interface.

Selon un autre mode de réalisation qui peut être également associé au précédent, la condition AL1/WU est vérifiée suite à un ordre d'activation WU émanant d'une couche de niveau supérieur à la couche MAC de l'interface telle par exemple d'une couche applicative.

L'interface Ethernet bascule du mode ACTIVE vers le mode L1_LISTENING suite à une détection d'inactivité de la couche physique (événement NL1) pendant une durée TL1_INACTIVE.

Par ailleurs, l'interface Ethernet bascule vers le mode OFF dès que l'équipement qui l'héberge est mis hors tension et ce quel que soit le mode ACTIVE, HIBERNATE, L1_LISTENING dans lequel se trouve l'interface Ethernet.

La Fig. 4 représente un chronogramme illustrant le fonctionnement d'une interface Ethernet mettant en oeuvre le mode de réalisation du procédé de la Fig. 3.

Admettons que les deux équipements A et B sont en veille et que chacun implémente la fonctionnalité de détection d'énergie. Les interfaces Ethernet ETHA et ETHB se trouvent dans le mode ACTIVE (zones Z1) et échangent des trames IDT.

Considérons maintenant que l'interface ETHA n'a pas détecté d'activité sur sa couche MAC pendant une durée égale à T_L2L, c'est-à-dire que la condition SC est vérifiée. L'interface ETHA bascule dans le mode HIBERNATE. L'interface ETHA est alors désactivée, n'émet plus de trames IDT et toute activité éventuelle sur sa couche physique est détectée tout en étant dans un mode basse consommation. L'interface ETHB continue de fonctionner dans un mode de consommation nominale étant donné qu'elle fonctionne toujours en mode ACTIVATE (zone Z2).

A partir du moment où l'interface Ethernet ETHB ne reçoit plus de trame IDT de la part de l'interface Ethernet ETHA, l'interface Ethernet ETHB détecte qu'il n'y a plus d'activité sur sa couche physique et lance un compteur NL1 initialisé à la durée T_L1_INACTIVE, typiquement 250 ms. Pendant cette durée, l'interface ETHB fonctionne dans le mode ACTIVATE et continue à émettre des trames IDT tout en écoutant si elle ne reçoit pas de nouvelle trame IDT. A l'expiration de la durée T_L1_INACTIVE (condition SC vérifiée), l'interface Ethernet ETHB bascule du mode ACTIVATE vers le mode L1_LISTENING, c'est-à-dire dans un mode basse consommation (zone 3).

A partir du moment où l'interface Ethernet ETHA ne reçoit plus de trame IDT de la part de l'interface Ethernet ETHB, l'interface Ethernet ETHA détecte qu'il n'y a plus d'activité sur sa couche physique et lance un compteur NL1 initialisé à la durée T_L1_INACTIVE, typiquement 250 ms. Pendant cette durée, l'interface ETHA fonctionne dans le mode HIBERNATE. A l'expiration de la durée T_L1_INACTIVE (condition LC vérifiée), l'interface Ethernet ETHA bascule du mode HIBERNATE vers le mode L1_LISTENING et reste donc dans un mode basse consommation (zone 3). Les interfaces ETHA et ETHB sont alors dans le mode L1_LISTENING (zone 4).

Considérons maintenant qu'un ordre d'activation WU ait été émis par une couche applicative de l'équipement A. La condition AL1/WU est vérifiée au niveau de l'interface ETHA qui bascule alors du mode L1_LISTENING vers le mode ACTIVATE et émet des trames NPL/FLP relatives à la phase de négociation de lien. L'interface ETHB détecte de l'activité sur sa couche physique (événement AL1/WU) et bascule alors du mode L1_LISTENING vers le mode ACTIVATE afin de répondre à la phase de négociation initiée par l'interface ETHA.

Ainsi, bien que les deux interfaces ETHA et ETHB étaient jusque-là dans un mode basse consommation, un ordre d'activation émanant d'une couche de niveau supérieur à celui de la couche MAC de l'interface ETHA provoque non seulement l'activation de l'interface ETHA mais également celle de l'interface distante ETHB.

Les deux interfaces ETHA et ETHB fonctionnent alors dans le mode ACTIVATE tel que décrit en relation avec la Fig. 2.

Le procédé décrit en relation avec les Fig. 3 et 4 est prévu pour être implémenté sur les deux interfaces Ethernet ETHA et ETHB. Toutefois, il peut arriver que l'un des deux équipements, par exemple B, n'implémente ni ce procédé ni même la fonctionnalité de détection d'énergie.

Pour que le procédé de réduction de la consommation électrique permette toutefois d'économiser de l'énergie au niveau de l'interface Ethernet qui met en oeuvre le procédé selon la présente invention, l'interface Ethernet ETHA bascule du mode HIBERNATE vers le mode L1_LISTENING à l'expiration d'une durée Eth_Toff débutant à partir de l'entrée de l'interface Ethernet dans le mode HIBERNATE. Ainsi, les moyens matériels de la couche physique de l'interface ETHB restent alimentés électriquement pendant la zone Z3 (en référence à la Fig. 4) et malgré que l'interface ETHB continue alors à émettre des trames IDT, l'interface ETHA bascule du mode HIBERNATE vers le mode L1_LISTENING à l'expiration de la durée ETH_Toff.

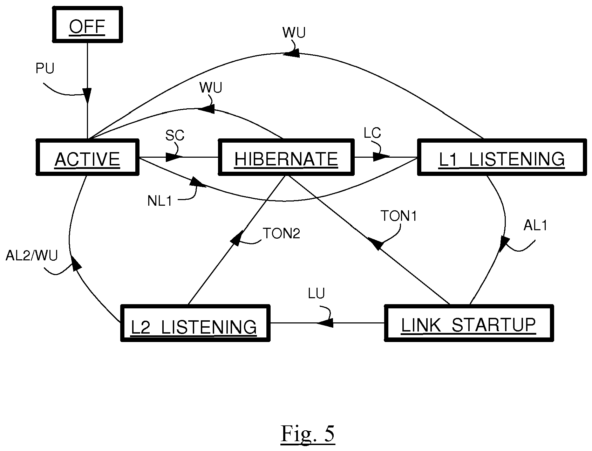

La Fig. 5 représente un diagramme d'état du procédé de réduction de la consommation électrique d'une interface Ethernet selon un autre mode de réalisation de la présente invention.

Ce mode de réalisation est particulièrement avantageux lorsque la consommation électrique est privilégiée par rapport à la réactivité du rétablissement du lien Ethernet, c'est-à-dire par rapport à la durée nécessaire pour activer les interfaces distantes et pour réaliser la phase de négociation entre ces interfaces.

Pour cela, la condition AL1/WU de la Fig. 3 qui permet à l'interface Ethernet de basculer du mode L1_LISTENING vers le mode ACTIVE est limitée à l'ordre d'activation WU.

En effet, suite à la détection d'une activité sur sa couche physique (évènement AL1), l'interface bascule du mode L1_LISTENING vers un mode dit de négociation et appelé LINK STARTUP et non vers le mode ACTIVE comme cela est le cas à la Fig. 3.

Dans le mode LINK STARTUP, l'interface Ethernet est activée et tente d'établir un lien Ethernet avec une autre interface Ethernet distante.

L'interface Ethernet bascule du mode LINK STARTUP vers le mode HIBERNATE à l'expiration d'une durée Ton1 décomptée à partir de l'entrée de l'interface Ethernet dans le mode LINK_STARTUP et déterminée pour laisser le temps nécessaire au lien Ethernet de s'établir. Dans le cas contraire, il permet à l'interface de basculer vers le mode HIBERNATE.

L'interface Ethernet bascule du mode LINK STARTUP à un mode d'écoute L2_LISTENING lorsque le lien est établi (événement LU). Dans le mode L2_LISTENING, l'interface est activée et toute activité éventuelle sur sa couche MAC est détectée.

L'interface Ethernet bascule du mode L2_LISTENING vers le mode HIBERNATE à l'expiration d'une durée Ton2 prédéterminée, typiquement 5s, et débutant à partir de l'entrée de l'interface Ethernet dans le mode L2_LISTENING.

L'interface bascule du mode L2_LISTENING vers le mode ACTIVATE suite à un ordre d'activation WU émanant d'une couche de niveau supérieur à celui de sa couche MAC ou suite à la détection AL2 d'une activité sur sa couche MAC.

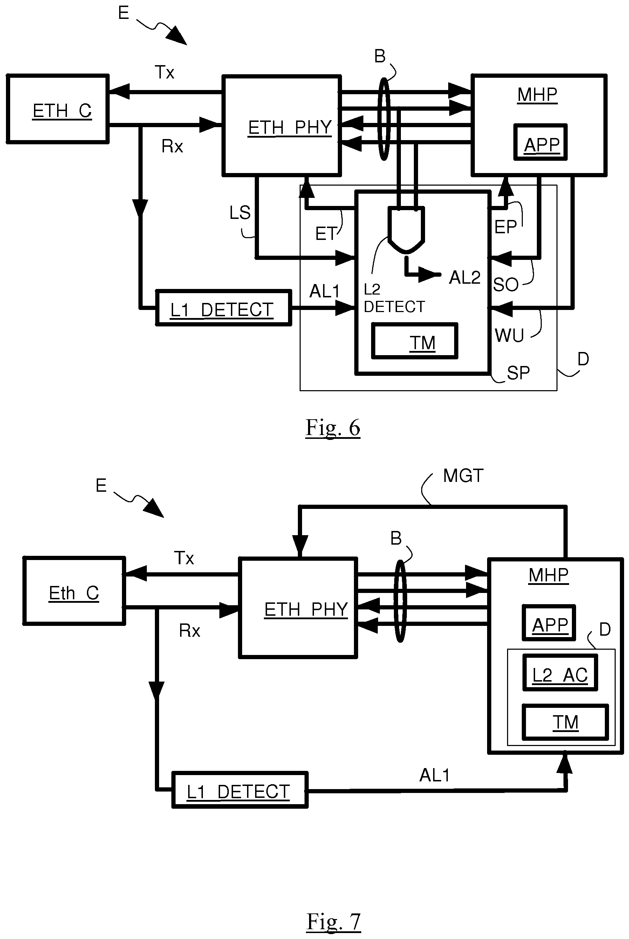

La Fig. 6 représente un synoptique d'un mode de réalisation d'un équipement qui héberge une interface Ethernet et qui met en oeuvre l'un des procédés selon la présente invention décrit en relation avec les Fig. 3 et 5.

L'équipement E comporte des moyens matériels pour mettre en oeuvre les fonctionnalités de la couche physique et de la couche MAC d'une interface Ethernet.

Les moyens matériels mettant en oeuvre les fonctionnalités de la couche physique de l'interface Ethernet sont ici représentés par un ensemble de composants électroniques couramment appelés Ethernet Physic Chipset en anglais et référencés sur la Fig. 6 par ETH_PHY.

Les moyens matériels qui mettent en oeuvre les fonctionnalités de la couche MAC de l'interface Ethernet sont ici représentés par un processeur référencé MHP. Habituellement, ce microprocesseur met également en oeuvre des couches de niveau supérieur à la couche MAC de l'interface Ethernet, telle qu'une couche applicative référencée ici APP.

L'équipement E comporte également un connecteur Ethernet ETH_C prévu pour la connexion d'un câble et d'un détecteur L1_DETECT de l'activité de la couche physique de l'interface Ethernet dans le cas où l'équipement E assure la fonction de détection d'énergie. Dans le cas contraire, ce détecteur est ajouté au dispositif D pour mettre en oeuvre la présente invention.

L'ensemble ETH_PHY est relié, d'une part, au processeur MHP par un bus B de type MII et, d'autre part, au connecteur Ethernet ETH_C.

Le détecteur L1_DETECT s'appuie sur un détecteur d'impulsions NLP/FLP conforme à la norme 802.3 clause 28. Il est basé sur des composants discrets dont l'entrée est reliée sur la liaison entre le connecteur Ethernet ETH_C et l'ensemble ETH_PHY dans la direction réception Rx. La sortie AL1 peut être câblée sur une ligne d'interruption d'un microprocesseur. Ainsi, lorsqu'une trame est reçue par le connecteur Ethernet ETH_C, la sortie AL1 change d'état signifiant par là une activité sur la couche physique de l'interface Ethernet.

Ainsi, lorsqu'une trame est reçue par le connecteur Ethernet ETH_C, elle est transmise à l'ensemble ETH_PHY dans la direction Rx. Cette trame est alors transmise au processeur MHP via le bus B dans la direction Rx. Inversement, lorsqu'une trame est émise par le processeur MHP via le bus B dans la direction Tx, la trame est reçue par l'ensemble ETH_PHY. Cette trame est alors transmise au connecteur Ethernet ETH_C dans la direction Tx.

L'équipement E comporte un dispositif D de réduction de la consommation électrique de l'interface qui met en oeuvre le procédé selon la Fig. 3 ou 5.

Le dispositif comporte un second processeur SP, des moyens TM pour mettre en oeuvre des compteurs de durée et un détecteur L2_DETECT de l'activité bi-directionnelle de la couche MAC de l'interface Ethernet.

Les moyens TM mémorisent les durées T_L1_INACTIVE, Eth_Toff, TON1, TON2 et T_L2L et déclenchent des compteurs selon ces durées comme expliqué aux Fig. 3 et 5.

Selon un mode de réalisation, le détecteur L2_DETECT est une porte logique OU à deux entrées reliées au bus B : l'une sur la partie du bus relative à la direction de transmission Tx et l'autre à la direction de réception Tx. Ainsi, dès qu'une trame est reçue ou émise via l'ensemble ETH_PHY, la sortie de la porte OU passe à 1, signifiant par là une activité dans l'une ou l'autre direction sur la couche MAC de l'interface Ethernet.

Le second processeur SP met en oeuvre le procédé selon la Fig. 3 ou 5. Pour cela, il est relié à la sortie du détecteur L1_DETECT de manière à recevoir la sortie AL1 et au bus B que ce soit dans la direction de transmission Tx que de réception Rx. La fonction de la porte logique OU est alors réalisée par ce processeur.

Le processeur SP est également relié à l'ensemble ETH_PHY d'une part pour lui envoyer un signal ET destiné à soit désactiver cet ensemble soit à l'activer selon le procédé de la présente invention, et, d'autre part, pour recevoir de cet ensemble un signal LS qui informe le processeur du résultat d'une phase de négociation pour l'établissement d'un lien Ethernet entre interfaces distantes.

Le second processeur SP est également relié au processeur MHP. Tout d'abord, le processeur SP est relié au processeur MHP pour lui envoyer un signal EP pour indiquer à ce processeur qu'il peut basculer dans un mode basse consommation. Ce signal EP indique également au processeur MHP de basculer en mode nominal. Le processeur SP est relié au processeur MHP pour recevoir de ce dernier un signal SO et un signal WU. Le signal SO, qui émane d'une couche de niveau supérieur à celui de la couche MAC de l'interface, ordonne au processeur SP de faire basculer l'interface vers le mode HIBERNATE et le signal WU, qui émane également d'une couche de niveau supérieur à celui de la couche MAC de l'interface, ordonne au processeur SP de faire basculer l'interface Ethernet vers le mode ACTIVATE.

Ce mode de réalisation est particulièrement intéressant car le processeur SP, qui n'a pas besoin d'être un processeur très évolué comparé au processeur MHP peut être un processeur à faible consommation électrique, typiquement inférieur à 50 mw.

Ce mode de réalisation est adapté à des équipements qui ont pour vocation de se mettre « complètement » en veille (coupure en alimentation électrique des moyens matériels qui mettent en oeuvre la couche physique et MAC de l'interface Ethernet) tout en assurant un réveil par leur interface Ethernet. C'est le cas notamment des Set Top Box. Ainsi, les modes basse consommation (HIBERNATE, L1_LISTENING) permettent l'arrêt complet de l'ensemble ETH_PHY et du processeur MHP tout en demandant un budget de consommation réduit pour assurer leur réveil.

La Fig. 7 représente un synoptique d'un autre mode de réalisation d'un équipement hébergeant une interface Ethernet et qui met en oeuvre l'un des procédés selon la présente invention décrits en relation avec les Fig. 3 et 5.

Les références de la Fig. 7 qui sont communes aux références de la Fig. 6 désignent les mêmes éléments.

Selon ce mode de réalisation, le dispositif D est intégralement intégré dans le processeur MHP et le processeur est relié à l'ensemble ETH_PHY par un bus de management de l'ensemble ETH_PHY du type par exemple MDC/MDIO habituellement utilisé pour activer et désactiver la couche physique de l'interface Ethernet.

Le détecteur L2_DETECT est ici mis en oeuvre de manière programmée (L2_AC).

Le détecteur L1_DETECT est relié au processeur MHP pour que lorsqu'une trame est reçue par le connecteur Ethernet ETH_C, la sortie AL1 change d'état signifiant par là une activité sur la couche MAC de l'interface Ethernet.

Ce mode de réalisation est adapté à des équipements dont le processeur principal (MHP) est toujours en activité, tel que par exemple des passerelles qu'elles soient domestiques ou pas. L'avantage de ce mode de réalisation est d'optimiser le coût financier de la mise en oeuvre de l'un des procédés selon la présente invention du fait que ce procédé est intégré au sein d'un processeur existant dans les équipements actuels.

## Revendications

1. Procédé de réduction de la consommation électrique d'une interface Ethernet basculant d'un mode actif (ACTIVE) dans lequel l'interface Ethernet est activée vers un premier mode basse consommation (L1_LISTENING) lorsqu'une inactivité est détectée sur sa couche physique pendant une première durée prédéterminée (T_L1_INACTIVE), le premier mode basse consommation (L1_LISTENING) étant tel que l'interface Ethernet est désactivée et une activité éventuelle sur ladite couche physique est détectée **caractérisé en ce que** l'interface bascule également du mode actif dans un deuxième mode basse consommation appelé mode transitoire (HIBERNATE) dans lequel l'interface Ethernet cesse toute émission de trames de signaux soit lorsqu'une inactivité sur sa couche MAC est détectée pendant une deuxième durée prédéterminée (T_L2L) débutant à partir de la dernière détection d'activité sur sa couche MAC soit suite à un ordre de désactivation de l'interface émanant d'une couche de niveau supérieur à celui de sa couche MAC.

2. Procédé selon la revendication 1, dans lequel l'interface est désactivée lorsque l'interface Ethernet fonctionne dans le mode transitoire.

3. Procédé selon la revendication 1 ou 2, dans lequel l'interface Ethernet bascule du mode transitoire (HIBERNATE) vers le mode inactif (L1_LISTENING) lorsqu'une inactivité sur sa couche physique est détectée pendant la première durée prédéterminée (T_L1_INACTIVE) débutant à partir de la dernière activité sur sa couche physique.

4. Procédé selon l'une des revendications 1 à 3, dans lequel l'interface Ethernet bascule du mode transitoire (HIBERNATE) vers le mode inactif (L1_LISTENING) à l'expiration d'une durée (Eth_Toff) débutant à partir de l'entrée de l'interface Ethernet dans le mode transitoire.

5. Procédé selon l'une des revendications 1 à 4, dans lequel l'interface Ethernet bascule du mode transitoire (HIBERNATE) vers le mode actif (ACTIVATE) suite à un ordre d'activation (WU) émanant d'une couche de niveau supérieur à celui de la couche MAC.

6. Procédé selon l'une des revendications 1 à 5, dans lequel l'interface Ethernet bascule du mode inactif (L1_LISTENING) vers le mode actif (ACTIVE) suite à un ordre d'activation (WU) émanant d'une couche de niveau supérieur à celui de la couche MAC.

7. Procédé selon l'une des revendications 1 à 6, dans lequel l'interface Ethernet bascule du mode inactif (L1_LISTENING) vers le mode actif (ACTIVE) suite à la détection d'une activité sur sa couche physique (AL1).

8. Procédé selon l'une des revendications 1 à 6, dans lequel suite à la détection d'une activité sur la couche physique (AL1), l'interface bascule du mode inactif (L1_LISTENING) vers un mode dit de négociation (LINK STARTUP) dans lequel l'interface est activée et tente d'établir un lien Ethernet avec une autre interface Ethernet distante.

9. Procédé selon la revendication 8, dans lequel l'interface bascule du mode de négociation (LINK STARTUP) vers le mode transitoire (HIBERNATE) à l'expiration d'une troisième durée (Ton1) débutant à partir de l'entrée de l'interface Ethernet dans le mode de négociation et déterminée pour laisser le temps nécessaire au lien Ethernet pour s'établir.

10. Procédé selon la revendication 8 ou 9, dans lequel l'interface Ethernet bascule du mode de négociation (LINK STARTUP) à un mode d'écoute (L2_LISTENING) dans lequel l'interface est activée et toute activité éventuelle sur sa couche MAC est détectée.

11. Procédé selon la revendication 10, dans lequel l'interface bascule du mode d'écoute (L2_LISTENING) vers le mode transitoire (HIBERNATE) à l'expiration d'une quatrième durée (Ton2) prédéterminée débutant à partir de l'entrée de l'interface Ethernet dans le mode d'écoute.

12. Procédé selon l'une revendication 10 ou 11, dans lequel l'interface bascule du mode d'écoute (L2_LISTENING) vers le mode actif (ACTIVATE) suite à un ordre (WU) émanant d'une couche de niveau supérieur à celui de sa couche MAC ou suite à la détection d'une activité sur sa couche MAC (AL2).

13. Dispositif de réduction de la consommation électrique d'une interface Ethernet (ETHA) hébergée par un équipement (A),
- un détecteur (L1_DETECT) d'une activité sur la couche physique de l'interface Ethernet,
- des moyens (ET) pour faire passer l'interface Ethernet d'un premier mode vers un premier mode basse consommation (L1_LISTENING) lorsqu'une inactivité sur sa couche physique est détectée pendant une première durée prédéterminée (T_L1_INACTIVE), le premier mode basse consommation étant tel que, l'interface Ethernet est désactivée et une activité éventuelle sur ladite couche physique est détectée ;
- des moyens (ET) pour activer l'interface Ethernet suite à un ordre (EP) émanant d'une couche de niveau supérieur à celui de la couche MAC de l'interface,
**caractérisé en ce qu'**il comporte
- un détecteur (L2_DETECT) de l'activité bi-directionnelle sur une couche MAC de l'interface Ethernet, et
- des moyens (SP, SO, TM) pour faire passer l'interface Ethernet du mode actif (ACTIVE), dans lequel l'interface Ethernet est activée et un deuxième mode basse consommation appelé mode transitoire (HIBERNATE) dans lequel l'interface Ethernet cesse toute émission de trames de signaux soit lorsqu'une inactivité sur la couche MAC de l'interface Ethernet est détectée pendant une deuxième durée prédéterminée (T_L2L) débutant à partir de la dernière détection d'activité sur la couche MAC de l'interface Ethernet ou suite à un ordre de désactivation (SO) émanant d'une couche de niveau supérieur à celui de la couche MAC de l'interface Ethernet, le premier mode étant soit le mode actif (ACTIVE), soit le mode transitoire (HIBERNATE).

14. Dispositif selon la revendication 13, dans lequel le détecteur (L2_DETECT) de l'activité bi-directionnelle sur la couche MAC de l'interface Ethernet est un moyen remplissant une fonction logique OU à deux entrées, l'une des entrées étant destinée à détecter la réception d'une trame sur la couche MAC de l'interface et l'autre étant destinée à détecter l'émission d'une trame sur la couche MAC de l'interface.

15. Equipement hébergeant une interface Ethernet comprenant des moyens (MHP, ETH_PHY, ETH_C) pour mettre en oeuvre les fonctionnalités de la couche physique et de la couche MAC de l'interface Ethernet, **caractérisé en ce qu'**il comporte un processeur dédié (SP) pour la mise en oeuvre d'un procédé conforme à l'une des revendications 1 à 12.

16. Equipement hébergeant une interface Ethernet comprenant un processeur principal (MHP) et des moyens (ETH_PHY, ETH_C) pour mettre en oeuvre les fonctionnalités de la couche physique et de la couche MAC de l'interface Ethernet, **caractérisé en ce qu'**un dispositif conforme à la revendication 13 ou 14 est mis en oeuvre par le processeur principal (MHP).

## Patentansprüche

1. Verfahren zur Verringerung des Stromverbrauchs einer Ethernet-Schnittstelle, die von einem Aktivmodus (ACTIVE), in dem die Ethernet-Schnittstelle aktiviert ist, in einen ersten Niederverbrauchsmodus (L1_LISTENING) wechselt, wenn eine Inaktivität auf ihrer physikalischen Schicht während einer ersten vorbestimmten Zeitdauer (T_L1_INACTIVE) erfasst wird, wobei der erste Niederverbrauchsmodus (L1_LISTENING) derart ist, dass die Ethernet-Schnittstelle deaktiviert ist, und eine eventuelle Aktivität auf der physikalischen Schicht erfasst wird, **dadurch gekennzeichnet, dass** die Schnittstelle auch vom Aktivmodus in einen zweiten Niederverbrauchsmodus, Übergangsmodus (HIBERNATE) genannt, wechselt, in dem die Ethernet-Schnittstelle jedes Senden von Signalrahmen einstellt, entweder wenn eine Inaktivität auf ihrer MAC-Schicht während einer zweiten vorbestimmten Zeitdauer (T_L2L) erfasst wird, die ab der letzten Erfassung einer Aktivität auf ihrer MAC-Schicht beginnt, oder nach einem Befehl zur Deaktivierung der Schnittstelle, der von einer Schicht einer höheren Ebene als jene ihrer MAC-Schicht ausgeht.

2. Verfahren nach Anspruch 1, bei dem die Schnittstelle deaktiviert ist, wenn die Ethernet-Schnittstelle im Übergangsmodus funktioniert.

3. Verfahren nach Anspruch 1 oder 2, bei dem die Ethernet-Schnittstelle vom Übergangsmodus (HIBERNATE) in den inaktiven Modus (L1_LISTENING) wechselt, wenn eine Inaktivität auf ihrer physikalischen Schicht während der vorbestimmten Dauer (T_L1_INACTIVE), die ab der letzten Aktivität auf ihrer physikalischen Schicht beginnt, erfasst wird.

4. Verfahren nach Anspruch 1 bis 3, bei dem die Ethernet-Schnittstelle vom Übergangsmodus (HIBERNATE) in den inaktiven Modus (L1_LISTENING) bei Ablauf einer Dauer (Eth_Toff), die ab dem Eintritt der Ethernet-Schnittstelle in den Übergangsmodus beginnt, wechselt.

5. Verfahren nach einem der Ansprüche 1 bis 4, bei dem die Ethernet-Schnittstelle vom Übergangsmodus (HIBERNATE) in den Aktivmodus (ACTIVATE) nach einem Aktivierungsbefehl (WU), der von einer Schicht einer höheren Ebene als jene der MAC-Schicht ausgeht, wechselt.

6. Verfahren nach einem der Ansprüche 1 bis 5, bei dem die Ethernet-Schnittstelle vom inaktiven Modus (L1_LISTENING) in den Aktivmodus (ACTIVE) nach einem Aktivierungsbefehl (WU), der von einer Schicht einer höheren Ebene als jene der MAC-Schicht ausgeht, wechselt.

7. Verfahren nach einem der Ansprüche 1 bis 6, bei dem die Ethernet-Schnittstelle vom inaktiven Modus (L1_LISTENING) in den Aktivmodus (ACTIVE) nach der Erfassung einer Aktivität auf ihrer physikalischen Schicht (AL1) wechselt.

8. Verfahren nach einem der Ansprüche 1 bis 6, bei dem nach der Erfassung einer Aktivität auf der physikalischen Schicht (AL1) die Schnittstelle vom inaktiven Modus (L1_LISTENING) in einen so genannten Verhandlungsmodus (LINK STARTUP) wechselt, in dem die Schnittstelle aktiviert ist und versucht, eine Ethernet-Verbindung mit einer anderen entfernten Ethernet-Schnittstelle aufzubauen.

9. Verfahren nach Anspruch 8, bei dem die Schnittstelle vom Verhandlungsmodus (LINK STARTUP) in den Übergangsmodus (HIBERNATE) nach Ablauf einer dritten Dauer (Ton1) wechselt, die ab dem Eintritt der Ethernet-Schnittstelle in den Verhandlungsmodus beginnt und so bestimmt ist, dass sie der Ethernet-Verbindung die notwendige Zeit lässt, um sich aufzubauen.

10. Verfahren nach Anspruch 8 oder 9, bei dem die Ethernet-Schnittstelle vom Verhandlungsmodus (LINK STARTUP) in einen Zuhörmodus (L2_LISTENING) wechselt, in dem die Schnittstelle aktiviert ist, und jede eventuelle Aktivität auf ihrer MAC-Schicht erfasst wird.

11. Verfahren nach Anspruch 10, bei dem die Schnittstelle vom Zuhörmodus (L2_LISTENING) in den Übergangsmodus (HIBERNATE) bei Ablauf einer vierten vorbestimmten Dauer (Ton2), die ab dem Eintritt der Ethernet-Schnittstelle in den Zuhörmodus beginnt, wechselt.

12. Verfahren nach einem Anspruch 10 oder 11, bei dem die Schnittstelle vom Zuhörmodus (L2_LISTENING) in den Aktivmodus (ACTIVATE) nach einem Befehl (WU), der von einer Schicht einer höheren Ebene als jene ihrer MAC-Schicht ausgeht, oder nach der Erfassung einer Aktivität auf ihrer MAC-Schicht (AL2) wechselt.

13. Vorrichtung zur Verringerung des Stromverbrauchs einer Ethernet-Schnittstelle (ETHA), die in einer Ausrüstung (A) aufgenommen ist, umfassend
- einen Detektor (L1_DETECT) einer Aktivität auf der physikalischen Schicht der Ethernet-Schnittstelle,
- Mittel (ET), um die Ethernet-Schnittstelle von einem ersten Modus in einen ersten Niederverbrauchsmodus (L1_LISTENING) übergehen zu lassen, wenn eine Inaktivität auf ihrer physikalischen Schicht während einer ersten vorbestimmten Dauer (T_L1_INACTIVE) erfasst wird, wobei der erste Niederverbrauchsmodus derart ist, dass die Ethernet-Schnittstelle deaktiviert ist, und eine eventuelle Aktivität auf der physikalischen Schicht erfasst wird;
- Mittel (ET), um die Ethernet-Schnittstelle nach einem Befehl (EP), der von einer Schicht einer höheren Ebene als jene der MAC-Schicht der Schnittstelle ausgeht, zu aktivieren,
**dadurch gekennzeichnet, dass** sie umfasst
- einen Detektor (L2_DETECT) der bidirektionalen Aktivität auf einer MAC-Schicht der Ethernet-Schnittstelle, und
- Mittel (SP, SO, TM), um die Ethernet-Schnittstelle vom Aktivmodus (ACTIVE), in dem die Ethernet-Schnittstelle aktiviert ist und in einen zweiten Niederverbrauchsmodus, Übergangsmodus (HIBERNATE) genannt, wechselt, in dem die Ethernet-Schnittstelle jedes Senden von Signalrahmen einstellt, entweder wenn eine Inaktivität auf der MAC-Schicht der Ethernet-Schnittstelle während einer zweiten vorbestimmten Zeitdauer (T_L2L) erfasst wird, die ab der letzten Erfassung einer Aktivität auf der MAC-Schicht der Ethernet-Schnittstelle beginnt, oder nach einem Befehl zur Deaktivierung (SO), der von einer Schicht einer höheren Ebene als jene der MAC-Schicht der Ethernet-Schnittstelle ausgeht, wobei der erste Modus entweder der Aktivmodus (ACTIVE) oder der Übergangsmodus (HIBERNATE) ist.

14. Vorrichtung nach Anspruch 13, bei der der Detektor (L2_DETECT) der bidirektionalen Aktivität auf der MAC-Schicht der Ethernet-Schnittstelle ein Mittel ist, das eine logische ODER-Funktion mit zwei Eingängen erfüllt, wobei einer der Eingänge dazu bestimmt ist, den Empfang eines Rahmens auf der MAC-Schicht der Schnittstelle zu erfassen, und wobei der andere dazu bestimmt ist, das Senden eines Rahmens auf der MAC-Schicht der Schnittstelle zu erfassen.

15. Ausrüstung, umfassend eine Ethernet-Schnittstelle, umfassend Mittel (MHP, ETH_PHY, ETH_C), um die Funktionalitäten der physikalischen Schicht und der MAC-Schicht der Ethernet-Schnittstelle einzusetzen, **dadurch gekennzeichnet, dass** sie einen speziellen Prozessor (SP) für den Einsatz eines Verfahrens nach einem der Ansprüche 1 bis 12 umfasst.

16. Ausrüstung, umfassend eine Ethernet-Schnittstelle, umfassend einen Hauptprozessor (MHP) und Mittel (ETH_PHY, ETH_C), um die Funktionalitäten der physikalischen Schicht und der MAC-Schicht der Ethernet-Schnittstelle einzusetzen, **dadurch gekennzeichnet, dass** eine Vorrichtung nach Anspruch 13 oder 14 von dem Hauptprozessor (MHP) eingesetzt wird.

## Claims

1. Method for decreasing the electrical consumption of an Ethernet interface that switches from an active mode (ACTIVE), in which the Ethernet interface is activated, to a first low-consumption mode (L1_LISTENING) when inactivity is detected on its physical layer for a first preset length of time (T_L1_INACTIVE), the first low-consumption mode (L1_LISTENING) being such that the Ethernet interface is deactivated and any activity on said physical layer is detected, **characterized in that** the interface also switches from the active mode to a second low-consumption mode called the temporary mode (HIBERNATE), in which the Ethernet interface ceases to emit signal frames, either when inactivity is detected on its MAC layer for a second preset length of time (T_L2L) starting from the last detection of activity on its MAC layer or following an order to deactivate the interface emanating from a layer of level higher than that of its MAC layer.

2. Method according to Claim 1, wherein the interface is deactivated when the Ethernet interface is operating in the temporary mode.

3. Method according to Claim 1 or 2, wherein the Ethernet interface switches from the temporary mode (HIBERNATE) to the inactive mode (L1_LISTENING) when inactivity is detected on its physical layer for the first preset length of time (T_L1_INACTIVE) starting from the last activity on its physical layer.

4. Method according to one of Claims 1 to 3, wherein the Ethernet interface switches from the temporary mode (HIEERNATE) to the inactive mode (L1_LISTENING) at the end of a length of time (Eth_Toff) starting from the entry of the Ethernet interface into the temporary mode.

5. Method according to one of Claims 1 to 4, wherein the Ethernet interface switches from the temporary mode (HIBERNATE) to the active mode (ACTIVATE) following an activation order (WU) emanating from a layer of level higher than that of the MAC layer.

6. Method according to one of Claims 1 to 5, wherein the Ethernet interface switches from the inactive mode (L1_LISTENING) to the active mode (ACTIVE) following an activation order (WU) emanating from a layer of level higher than that of the MAC layer.

7. Method according to one of Claims 1 to 6, wherein the Ethernet interface switches from the inactive mode (L1_LISTENING) to the active mode (ACTIVE) following detection of activity on its physical layer (AL1).

8. Method according to one of Claims 1 to 6, wherein, following detection of activity on the physical layer (AL1), the interface switches from the inactive mode (L1_LISTENING) to what is called a negotiation mode (LINK STARTUP) in which the interface is activated and attempts to establish an Ethernet link with another, remote Ethernet interface.

9. Method according to Claim 8, wherein the interface switches from the negotiation mode (LINK STARTUP) to the temporary mode (HIBERNATE) at the end of a third length of time (Ton1) starting from the entry of the Ethernet interface into the negotiation mode, said length of time being defined in order to leave the Ethernet link the time it requires to establish itself.

10. Method according to Claim 8 or 9, wherein the Ethernet interface switches from the negotiation mode (LINK STARTUP) to a listening mode (L2_LISTENING) in which the interface is activated and any activity on its MAC layer is detected.

11. Method according to Claim 10, wherein the interface switches from the listening mode (L2_LISTENING) to the temporary mode (HIBERNATE) at the end of a fourth preset length of time (Ton2) starting from the entry of the Ethernet interface into the listening mode.

12. Method according to either of Claims 10 and 11, wherein the interface switches from the listening mode (L2_LISTENING) to the active mode (ACTIVATE) following an order (WU) emanating from a layer of level higher than that of its MAC layer or following detection of activity on its MAC layer (AL2).

13. Device for decreasing the electrical consumption of an Ethernet interface (ETHA) of a piece of equipment (A),
- a detector (L1_DETECT) for detecting activity on the physical layer of the Ethernet interface;
- means (ET) for making the Ethernet interface pass from a first mode to a first low-consumption mode (L1_LISTENING) when inactivity is detected on its physical layer for a first preset length of time (T_L1_INACTIVE), the first low-consumption mode being such that the Ethernet interface is deactivated and any activity on said physical layer is detected; and
- means (ET) for activating the Ethernet interface following an order (EP) emanating from a layer of level higher than that of the MAC layer of the interface,
**characterized in that** it includes:
- a detector (L2_DETECT) for detecting bi-directional activity on a MAC layer of the Ethernet interface; and
- means (SP, SO, TM) for making the Ethernet interface pass from the active mode (ACTIVE), in which the Ethernet interface is activated, and a second low-consumption mode called the temporary mode (HIBERNATE), in which the Ethernet interface ceases to emit signal frames, either when inactivity is detected on the MAC layer of the Ethernet interface for a second preset length of time (T_L2L) starting from the last detection of activity on the MAC layer of the Ethernet interface or following a deactivation order (SO) emanating from a layer of level higher than that of the MAC layer of the Ethernet interface, the first mode either being the active mode (ACTIVE) or the temporary mode (HIBERNATE).

14. Device according to Claim 13, wherein the detector (L2_DETECT) for detecting bi-directional activity on the MAC layer of the Ethernet interface is a means providing a two-input OR logic function, one of the inputs being intended to detect the reception of a frame over the MAC layer of the interface and the other being intended to detect the transmission of a frame over the MAC layer of the interface.

15. Piece of equipment with an Ethernet interface, comprising means (MHP, ETH_PHY, ETH_C) for implementing the functionalities cf the physical layer and of the MAC layer of the Ethernet interface, **characterized in that** it includes a dedicated processor (SP) for implementing a method according to one of Claims 1 to 12.

16. Piece of equipment with an Ethernet interface, comprising a main processor (MHP) and means (ETH_PHY, ETH_C) for implementing the functionalities of the physical layer and of the MAC layer of the Ethernet interface, **characterized in that** a device according to Claim 13 or 14 is implemented by the main processor (MHP).
